# EUROPEAN PATENT APPLICATION

(11) **EP 4 799 882 A1**
(43) Date of publication of application: **02.09.2026**
(21) Application number: 25160911.1
(22) Date of filing: 28.02.2025
(51) Int. Cl.: B60T 13/68, B60T 13/66, B60T 7/12

(54) **BRAKING CIRCUIT FOR A ROAD VEHICLE, ROAD VEHICLE AND CONTROL METHOD**

(71) Applicant: VOLVO TRUCK CORPORATION, 405 08 Göteborg (SE)
(72) Inventor: TALANKI K S, Vinay, 560077 BANGALORE (IN); ABRAHAM, Lionel, 69530 ORLIENAS (FR); DEL BELLO, Alexandre, 69800 SAINT PRIEST (FR)
(74) Representative: Lavoix

(57) **Abstract**

This brake circuit (100) for a road vehicle (10) comprises rear wheels (18), which are associated to parking brake actuators (102) controlled by a parking relay valve (104), and front wheels (16), which are each associated front brake actuators (112) controlled by a regulation device (114). The brake circuit includes a standstill control unit (120), which comprises a first input port (122A), configured to receive a first control signal (S122) representative of a state, active or inactive, of the parking relay valve (104), at least one additional input port (123) configured to receive an additional control signal (S123) representative of a state of the vehicle, including whether the engine (19) is running, and a first output port (122B), which is connected to the regulation device. The standstill control unit is configured to generate a control signal (S115) for controlling the regulation device, so that, in turn, the regulation device delivers a positive pressure to the front brake actuators, depending on whether the parking relay valve is in the inactive state, and whether the engine is running.

## Description

### TECHNICAL FIELD

The disclosure relates generally to road vehicles. In particular aspects, the disclosure relates to a braking circuit for a road vehicle, and to a road vehicle comprising such a braking circuit. The disclosure also relates to a control method implemented with such a braking circuit. The disclosure can be applied to medium-duty vehicles, such as trucks, buses, and construction equipment, among other vehicle types. Although the disclosure may be described with respect to a particular vehicle, the disclosure is not restricted to any particular vehicle.

### BACKGROUND

Road vehicles are commonly equipped with a parking brake, which applies a braking effort to the rear wheels of the vehicle when the truck is powered off. On trucks, the parking brake is usually achieved with spring brake cylinders working with negative pressure, that is to say that releases the braking effort applied to the wheels when supplied with pressurized air, and that applies a braking effort to the wheels when supplied with no or low air pressure. In some application, the trucks may need extra stability, by applying a braking effort the front wheels when the truck is stationary and performing an operation, e.g. loading / unloading. Heavy duty trucks - such as long-distance trailers - may be equipped, on the front wheels, with a system similar to the spring brake cylinders of the rear wheels. However, additional spring brake cylinders are costly. In addition, on so-called "medium duty trucks" - such as concrete mixers, crane trucks, etc. -, which are smaller than heavy duty trucks and which are more suitable for urban circulation, there is simply not enough space behind the wheels to integrate such spring brake cylinder.

Therefore, there is a need for a braking circuit that brings additional stability to a stationary truck.

### SUMMARY

A first aspect of the disclosure concerns a brake circuit for a road vehicle, the road vehicle comprising front wheels, rear wheels, and an engine to drive at least some of the wheels in rotation, wherein the brake circuit comprises:
- parking brake actuators, which are associated with the rear wheels and which comprise a primary input port, the parking brake actuators being configured to release the brake to the rear wheels when the primary input port is subject to an air pressure above a predetermined parking pressure threshold, and to apply brake to lock the rear wheels when the primary input port is subject to an air pressure below the parking pressure threshold,
- a parking relay valve, which comprises an activation input port and a primary output port, the primary output port being fluidically connected to the primary input port so as to control the parking brake actuators, the activation input port being configured to receive a parking control signal so as to switch the parking relay valve between:
   - an active state, in which the parking relay valve is configured to deliver air pressure above the parking pressure threshold to the primary input port, so as to release the brake on the rear wheels, and
   - an inactive state, in which the parking relay valve is configured to let air pressure applied to the primary input port below the parking pressure threshold, so as apply the brake to the rear wheels,
- front brake actuators, which are each associated with a respective front wheels and which comprises a secondary input port, the front brake actuators being configured to release the brake on the front wheels when the secondary input ports are subject to a fluidic pressure that is null, and to progressively apply brake to the front wheels when the secondary input port is subject to an increasing positive fluidic pressure,
- a regulation device, which is associated with the front brake actuators, which is fluidically connected to the secondary input ports of the front brake actuators and which is configured to deliver positive fluidic pressure to the front brake actuators when receiving a service brake signal generated by a brake pedal of the vehicle,
wherein:
- the brake circuit includes a standstill control unit, which comprises:
   - a first input port, configured to receive a first control signal representative of the state, active or inactive, of the parking relay valve,
   - at least one additional input port, each additional input port being configured to receive an additional control signal representative of a state of the vehicle,
   - a first output port, which is connected to an input port of the regulation device and which is configured to output a variable output pressure,
- the standstill control unit is configured to generate a control signal for controlling the regulation device, so that, in turn, the regulation device delivers a positive pressure through the first output port, depending on:
   - whether, according to the first control signal, the parking relay valve is in the inactive state, and
   - whether, according to the at least one additional control signal, the engine is running.

The first aspect of the disclosure may seek to provide a low-cost, low space and secure solution to improve safety when the truck is parked with engine running. A technical benefit may include applying brake to the front wheels jointly with the rear wheels, when parking brake is applied as the engine is running. The vehicle is therefore more stable.

Optionally in some examples, including in at least one preferred example, the standstill control unit includes an inverted relay valve, which is different from the parking relay valve, the inverted relay valve comprising three ports, which include:
- a supply port, which is fluidically connected to a pressurized air supply of the vehicle,
- the first input port, the first control signal being a pneumatic signal, and
- the first output port,
wherein the inverted relay valve is configured:
- to deliver a non-null pressure through the first output port when the primary pressure output delivers a pressure below the parking pressure threshold, so as to apply brake to the front wheels, and
- to deliver a null pressure through the first output port when the primary output port delivers a pressure equal or above the parking pressure threshold, so as to release brake on the front wheels.

A technical benefit may include providing a cheap and robust solution to apply brake to the front wheels when the parking brake is engaged.

Optionally in some examples, including in at least one preferred example, the brake circuit further comprises a control valve, which is fluidically arranged on a fluidic connection between the first output port and the secondary input port, the control valve being configured to close or to open the fluidic connection of the first output port, depending on operating conditions of the vehicle.

A technical benefit may include providing a flexible solution to neutralize the brake on the front wheels when the engine is not running.

Optionally in some examples, including in at least one preferred example, the control valve is a solenoid valve. A technical benefit may include offering a cheap and reliable solution to neutralize the brake on the front wheels when the engine is not running.

Optionally in some examples, including in at least one preferred example, the brake circuit further comprises an electronic control unit, which is configured:
- to receive the at least one additional control signal relative to the operating conditions of the vehicle, the at least one additional control signal including whether the engine is running or not, and
- to open or close the control valve depending on said operating conditions.

A technical benefit may include a flexible solution to engage or neutralize the brake on the front wheels, depending on one or several parameters relative to the operating conditions of the vehicle.

Optionally in some examples, including in at least one preferred example, the regulation device is an EBS module, which is distinct from the standstill control unit.
A technical benefit may include providing reusing existing equipment of the vehicle, thus reducing the cost of implementing the invention.

Optionally in some examples, including in at least one preferred example, the regulation device is a front ABS module, which includes the standstill control unit. A technical benefit may include providing reusing existing equipment of the vehicle, thus reducing the cost of implementing the invention.

Optionally in some examples, including in at least one preferred example, the first input port is connected to the activation input port or to the first output port of the parking relay valve. A technical benefit may include offering a highly reliable solution, by receiving a control signal relative to the state of the parking relay valve direcly from the parking relay valve.

Optionally in some examples, including in at least one preferred example, the standstill control unit module includes an electronic control unit, which is configured:
- to receive at least one additional control signal relative to the operating conditions of the vehicle, the at least one additional control signal including whether the engine is running or not, and
- to deliver positive pressure through the first output port depending, jointly, on the first control signal and on the at least one additional control signal.

Another aspect of the disclosure concerns, including in at least one preferred example, a road vehicle, comprising the brake circuit as previously defined. A technical benefit may include offering a vehicle with improved operation safety, at a reasonable cost.

Optionally in some examples, including in at least one preferred example, wherein the vehicle is a truck, in particular a medium-duty truck. A technical benefit may include offering a vehicle with improved operation safety, at a reasonable cost, in spite of limited available space.

A second aspect of the disclosure concerns a method for controlling a vehicle, the vehicle comprising a brake circuit as previously defined, the method comprising:
- the reception, through the first input port, of the first control signal representative of a state, active or inactive, of the parking relay valve,
- the reception, through the electronic control unit, of at least one additional control signal on operating conditions of the vehicle, the at least one additional control signal including a second control signal relative to whether the engine is running or not,
- the determination whether the received control signals correspond to a pre-determined scenario, the predetermined scenario including:
   - determining whether the parking relay valve is in the inactive state, and
   - determining whether the engine is running,
- the generation of a control signal for controlling the regulation device, so as to deliver of a positive pressure through the first output port and to apply brake to the front wheels conjointly with the back wheels.

The second aspect of the disclosure may seek to improve operation safety of a vehicle, with high reliability, by applying brake to the front wheels when the parking brake is also applied to the rear wheels and when the engine is running.

Optionally in some examples, including in at least one preferred example, the at least one additional control signal includes control signal relative to whether a button arranged in a cabin of the vehicle is pressed or not. A technical benefit may include taking manual input into account when implementing the method according to the invention.

Optionally in some examples, including in at least one preferred example, the at least one additional control signal includes control signal relative to whether a power take off of the vehicle is activated or not.

Optionally in some examples, including in at least one preferred example, the at least one additional control signal includes control signal relative to whether the vehicle is located on a slope or not.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings, including:
- **FIG. 1** is an exemplary schematic representation of a vehicle according to a first embodiment of the invention, the vehicle including a brake circuit, also according to the first embodiment of the invention;
- **FIG. 2** is an exemplary schematic representation of a vehicle according to a second embodiment of the invention, the vehicle including a brake circuit, also according to the second embodiment of the invention;
- **FIG. 3** is an exemplary diagram representing a method of implemented with any one of the vehicles of figure 1 or figure 2.

### DETAILED DESCRIPTION

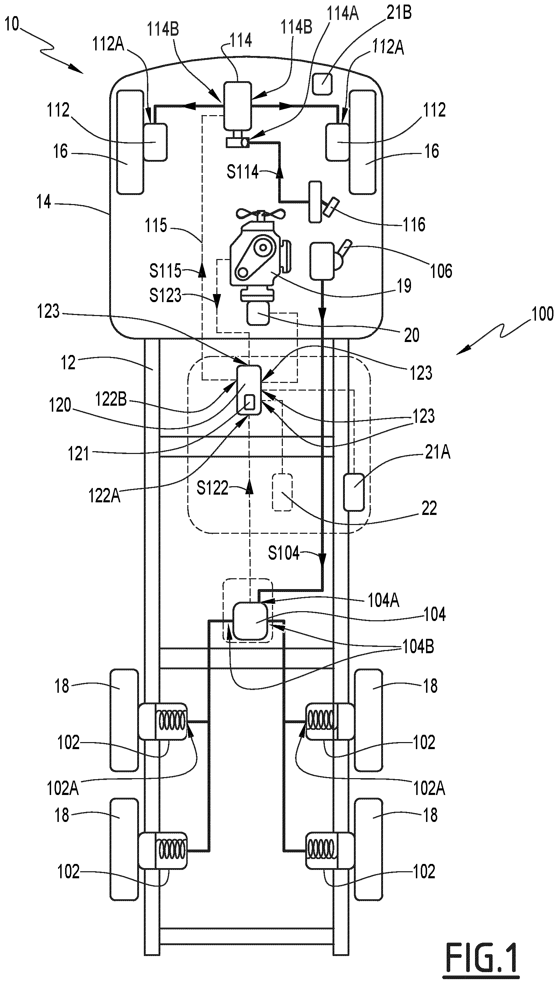

FIG. 1 shows an exemplary vehicle 10, according to a first embodiment of the invention. The vehicle 10 is a road vehicle, in particular a truck, preferably a medium-duty truck. Examples of medium-duty truck include concrete mixer trucks, crane trucks, etc. Usually, medium-duty trucks are involved with operation in urban areas, for example cargo loading or unloading, etc., where the truck may need extra-stability to offer a secure environment to the loading / unloading operations.

The vehicle 10 comprises a chassis 12, which has an elongated shape with two opposite ends, including a front end and a rear end. The vehicle 10 comprises a cabin 14, which is arranged at the front-end of the chassis 12. The cabin 14 usually includes a seat - not shown - for a driver operating the vehicle 12, in particular driving the vehicle 10. The vehicle 10 also comprises several pair of wheels, including at least one pair of front wheels 16, which are located close to the cabin 14, and at least one pair of rear wheels 18, which are located close to the rear end of the chassis 12. In the non-limiting illustrated examples, the vehicle 10 comprises one pair of front wheels 16, and two pairs of rear wheels 18.

The vehicle 10 also comprises a powertrain system, including an engine 19, and a transmission system, having in particular a gear shift and differentials, to drive at least some of the wheels in rotation. In the illustrated example, the vehicle 10 comprises a power take-off 20. The power take off 20, also designated by its acronym PTO 20, is a device used to transfer mechanical energy from the engine 19 to an additional piece of equipment - not shown -. The additional piece of equipment may be part of the vehicle 10, for example a concrete pump when the vehicle 10 is a mixer truck, or may be external to the vehicle 10.

The vehicle 10 also comprises a brake circuit 100.

The brake circuit 100 comprises parking brake actuators 102, which are associated with the rear wheels 18, and a parking relay valve 104, which is configured to control each parking brake actuator 102. Each rear wheel 18 is associated with a respective parking brake actuator 102. In the illustrated example, the parking brake actuator 102 are spring brake actuators. Each parking brake actuator 102 and which comprises a primary input port 102A, the parking actuator 102 being configured to release the brake applied to the associated rear wheel 18 when the primary input port 102A is subject to an air pressure above a predetermined parking pressure threshold P1, and to apply brake to the associated rear wheel 18 when the primary input port 102 is subject to an air pressure below the parking pressure threshold P1. When the fluidic pressure supplied to the primary input port 102A is above the parking pressure threshold P1, the release of the brake applied to the rear wheels 18 may be progressive, as fluidic pressure rises.

In the present description, unless specified otherwise, the terms "first", "second", "primary", "secondary", etc., are used to distinguish the various components of the vehicle 10 from each another, and do not imply any relative order or relative importance of the components with respect to one another. Within the scope of the present description, the expressions "applying brakes to the wheels", "applying a braking effort to the wheels" or "locking the wheels", etc., are considered to have similar meanings. Similarly, the expressions "releasing the brakes", "releasing the braking effort" and "unlocking the wheels", etc., are considered to have similar meanings.

The parking relay valve 104 comprises an activation input port 104A and a primary output port 104B, the primary output port 104B being fluidically connected to the primary input port 102A of each parking brake actuators 102 so as to control the parking brake actuators 102. the activation input port 104A is configured to receive a parking control signal S104 so as to switch the parking relay valve 104 between:
- an active state, in which the parking relay valve 104 is configured to deliver air pressure above the parking pressure threshold P1 to the primary input port 102A, so as to release the brake applied to the rear wheels 18, and
- an inactive state, in which the parking relay valve 104 is configured to let air pressure applied to the primary input port 102A below the parking pressure threshold P1, so as to let the rear wheels 18 in a state where brake is applied to the rear wheels.

In the illustrated non-limiting example, the parking relay valve 104 has two primary output ports 104B, which are each connected to two primary input port 102A. Alternatively, the parking relay valve 104 has four primary output ports 104B, each connected to a single primary input port 102A. Alternatively, the parking relay valve 104 has a single primary output ports 104B, which is connected to each one of the primary input ports 102A.

In the illustrated example, the brake circuit 100 comprises a control member 106, which is actionable by the driver, in order to generate the parking control signal S104 transmitted to the parking relay valve 104. In the illustrated example, the control member 106 is schematically represented by a hand lever. Depending on the architecture of the brake circuit 100, the parking control signal S104 may be a mechanical signal, transmitted to a cable, or a fluidic pressure signal, pneumatic or hydraulic, or an electrical signal, in a "brake-by-wire" configuration.

The brake circuit 100 also comprises front brake actuators 112, which are each associated to a respective front wheels 16. Each front brake actuator 112 comprises a secondary input ports 112A, each front brake actuator 112 being configured to release the brake applied to the associated front wheel 16 when the corresponding secondary input port 112A is subject to a fluidic pressure that is null, and to progressively apply brake to the front wheel 16 when the secondary input port 102A is subject to an increasing positive fluidic pressure. For sake of clarification, "null pressure" means "no additional pressure relative to the atmospheric pressure", as there is usually no vacuum or suction involved in the brake circuit 100. A positive pressure means "additional pressure relative to the atmospheric pressure".

The brake circuit 100 also comprises a regulation device 114, which is associated with the front brake actuators 112. The regulation device 114 comprises a secondary input port 114A and a secondary output port 114B, the secondary output port 114B being fluidically connected to the secondary input ports 112A of each front brake actuators 112 so as to control the front brake actuators 112. The regulation device 114 is configured to deliver positive fluidic pressure to the front brake actuators 112 when receiving a service brake signal S114 generated by a brake pedal 116 of the vehicle 10. In the illustrated example of figure 1, the regulation device 114 is an electronic braking system, also known under its acronym EBS. The EBS is usually supplied in pressurized air by and air tank - not shown -.

Alternatively, the regulation device 114 is part of an anti-blocking system associated with the front wheels 16, such module being called "front ABS module". Depending on the architecture of the brake circuit 100, the service brake signal S114 may be a mechanical signal, transmitted through a cable, or a fluidic pressure signal, pneumatic or hydraulic, or an electrical signal, in a "brake by wire" configuration.

The brake circuit 100 also comprises a standstill control unit 120. The standstill control unit 120 includes an electronic control unit 121, which is configured to receive several input signals relative to configurations and/or running state of the vehicle 10, to send at least one output signal to the regulation device 114, the at least one output signal being generated by the electronic control unit 121 depending on the several input signals. The standstill control unit 120 comprises:
- a first input port 122A, configured to receive a first control signal S122 representative of a state, active or inactive, of the parking relay valve 104,
- a first output port 122B, which is connected to the regulation device 114, and
- at least one additional input port 123, each additional input port 123 being configured to receive an additional control signal S123 relative to the an operating condition of the vehicle, the additional control signal being different from the other control signals.

In particular, the at least one additional input port 123 includes an input port that is configured to receive a control signal relative to whether the engine 19 is running or not. Advantageously, the at least one additional input port 123 includes an input port that is configured to receive a control signal relative to whether the power take-off 20 is activated or not. Advantageously, the at least one additional input port 123 includes an input port that is configured to receive a control signal relative to whether an external brake request 21A of the vehicle 10 is activated or not. Advantageously, the at least one additional input port 123 includes an input port that is configured to receive a control signal relative to whether a button 21B, arranged inside the cabin 14, has been pressed or not. Advantageously, the at least one additional input port 123 includes an input port that is configured to receive a control signal relative to whether the vehicle 10 is stationary on a slope or on flat ground. To this end, the vehicle 10 comprises a slope sensor 22. Advantageously, the at least one additional input port 123 includes an input port that is configured to receive a control signal relative to whether the vehicle 10 is in a loading / unloading situation. To this end, the vehicle 10 comprises a load sensor - not shown -. On figure 1, the standstill control unit 120 is represented functionally with several input ports 122A and 123, each input port being configured to receive specific a control signal relative to the operating conditions of the vehicle 10. Alternatively, one input port among the input ports 122A / 123 is configured to receive several control signals. For example, one of the additional input ports 123 is connected to a CAN bus, which carries several control signals related to the state of the vehicle 10.

The standstill control unit 120 is configured to control the regulation device 114, so that in turn the regulation device 114 delivers a positive pressure through the first output port 114B when, at least, the first control signal S122 is representative of the inactive state of the parking relay valve 104. In the illustrated example, the standstill control unit 120 is connected to the regulation device 114 through a cable 115, the regulation device 114 being configured to receive a control signal S115 generated by the standstill control unit 120. Preferably, the regulation device 114 is configured to deliver a positive pressure through the first output port 114B, depending on:
- whether, according to the first control signal S122 received by the standstill control unit 120, the parking relay valve 104 is in the inactive state or not, and
- whether, according to the at least one additional control signal S123 received by the standstill control unit 120, the engine 19 is running or not.

In a basic scenario of the invention, a braking effort is applied to the front wheels 16 when the engine 19 is running and, cumulatively, when the parking brake is engaged, applying a braking effort to the rear wheels 18. In the illustrated example, the first control signal S122 is an electric signal, which is representative of the state, active or inactive, of the parking relay valve 104. In a not shown alternative, the first control signal S122 is a pneumatic signal, in particular a signal representative, or even identical, to the signal delivered by the primary output ports 104B of the parking relay valve 104. In another not shown alternative, the first control signal is representative, or even identical, to the parking control signal S104.

In the first embodiment, illustrated in figure 1, the regulation device 114 is an EBS module, which is distinct from the standstill control unit 120. In a not shown alternative, the standstill control unit 120 and the regulation device 114 are part of a single piece of equipment. For example, when the regulation device 114 is a front ABS module, the front ABS module advantageously includes the standstill control unit 120.

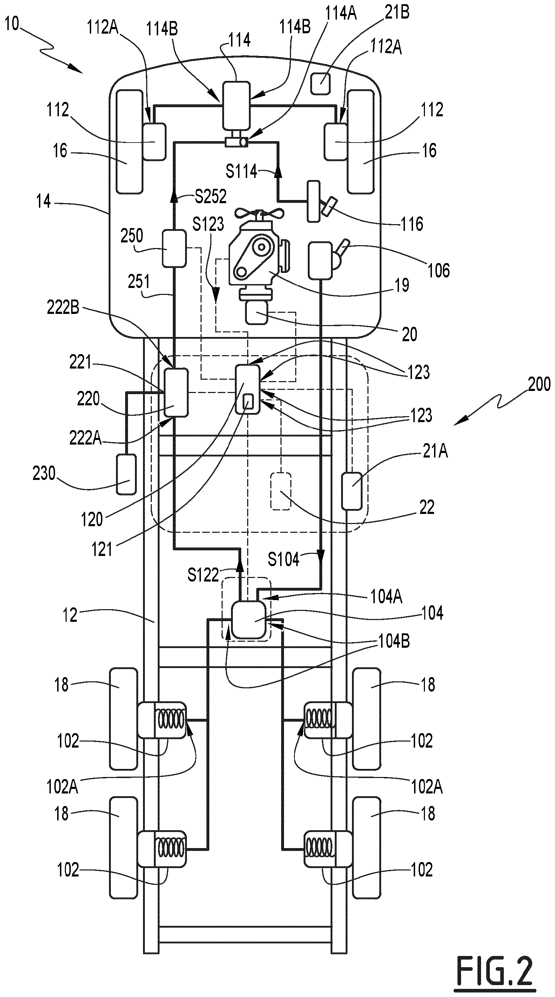

Figure 2 shows an alternative embodiment of a vehicle 10 according to the invention. In this embodiment, the parts of the vehicle identical or similar to the ones of the first embodiment have the same reference numerals. Here-after, mainly the differences between the first and second embodiments are detailed.

The vehicle 10 according to the second embodiment of the invention comprises a brake circuit 200, which differs from the brake circuit 100 of the vehicle 10 according to the first embodiment of the invention at least in that the standstill control unit 120 includes an inverted relay valve 220, which is arranged between the parking relay valve 104 and the regulation device 114. The inverted relay valve 220 is different from the parking relay valve 104.

The inverted relay valve 220 comprising three ports, that include:
- a supply port 221, which is fluidically connected to a pressurized air supply 230 - here an air tank - of the vehicle,
- a first input port 222A, which is connected fluidically connected to the primary output port 104B of the parking relay valve 104, the first control signal being a pneumatic signal,
- a first output port 222B, which is fluidically connected to an input port of the regulation device 114, here to the secondary input port 114A, and which is configured to output a control signal S252, in the form of a variable output pressure.

The inverted relay valve 220 is configured:
- to deliver a non-null pressure through the first output port 222A when the primary output port 104B delivers a pressure below the parking pressure threshold P1, so that, in turn, the regulation device 114 locks the front wheels 16,
- to deliver a null pressure through the first output port 222A when the primary output port 104B delivers a pressure equal or above the parking pressure threshold P1, so as not to lock the front wheels.

In other words, the inverted relay valve 220 generates the control signal S252 in the form of fluidic pressure, through the first output port 222B, which is inverted relative to fluidic pressure received from the parking relay valve 104 through the first output port 222A. The state of the parking relay valve 104, active or inactive, is deduced from the fluidic pressure received from the parking relay valve 104, below or above the parking pressure threshold P1. When the fluidic pressure received from the parking relay valve 104 is below the parking pressure threshold P1, which correspond to having the rear wheels locked by parking brake, then the inverted relay valve 220 outputs a positive pressure to the regulation device 114, which in turn locks the front wheels 16. When the fluidic pressure received from the parking relay valve 104 is equal to or above the parking pressure threshold P1, which correspond to having the rear wheels not locked by parking brake, then the inverted relay valve 220 outputs a null pressure to the regulation device 114, which does not lock the front wheels 16. The advantage of using an inverted relay valve 220 with pneumatic input and pneumatic output is that such architecture is highly reliable, with no software involved, and involves relatively low costs.

The air tank 230 is pressurized when the engine 19 is running. In other words,. The engine 19 must be running for the implementation of the invention. Preferably, the brake circuit 200 further comprises a control valve 250, which is fluidically arranged between the first output port 222A of the inverted relay valve 220 and the secondary input port 114A of the regulation device 114. The control device 250 is configured to close or to open the fluidic connection of the first output port 222B, depending on operating conditions of the vehicle 10. In the preferred illustrated example, the control valve 250 is a solenoid valve. The control valve 250 is controlled by an electronic control unit, preferably by the electronic control unit 121 of the standstill control unit 120. The electronic control unit 121 is configured:
- to receive at least one additional control signal relative to the operating conditions of the vehicle 10, the at least one additional control signal including whether the engine 19 is running or not, and
- to open or close the control valve 250 depending on said operating conditions.

In other words, the electronic control unit 121 is configured to neutralize the pneumatic signal delivered by the first output port 222B of the inverted relay valve 220 when the engine 19 is not running, and to allow the pneumatic signal delivered by the first output port 222B when the engine 19 is running. As an alternative or complement - not shown -, the electric control unit 121 is connected directly to the regulation device 114 in order to neutralize the pneumatic signal delivered by the first output port 222B of the inverted relay valve 220 when the engine 19 is not running. For example, the electric control unit 121 is connected directly to the regulation device 114 with a cable, for example with the cable 115, in the first embodiment of the invention represented on figure 1.

In the same basic scenario as for the brake circuit 100 according to the first embodiment of the invention, the brake circuit 200 according to the second embodiment of the invention is also configured to lock the front wheels 16 when the rear wheels 18 are locked with parking brake and, jointly, when the engine 19 is running. Alternatively or in addition, the electronic control unit 121 is configured to receive the control signal S122 relative to the state, active or inactive, of the parking brake valve 104, in a similar manner to the first embodiment of the invention.

The standstill control unit 120 is advantageously configured to receive one or several additional control signals representatives of operating conditions of the vehicle 10, for example:
- whether the power take-off 20 is activated or not,
- whether an external brake request 21A of the vehicle 10 is activated or not,
- whether the button 21B arranged in the cabin 14 is pressed or not
- whether the vehicle 10 is stationary on a slope or on flat ground,
- whether the vehicle 10 is in a loading / unloading situation.

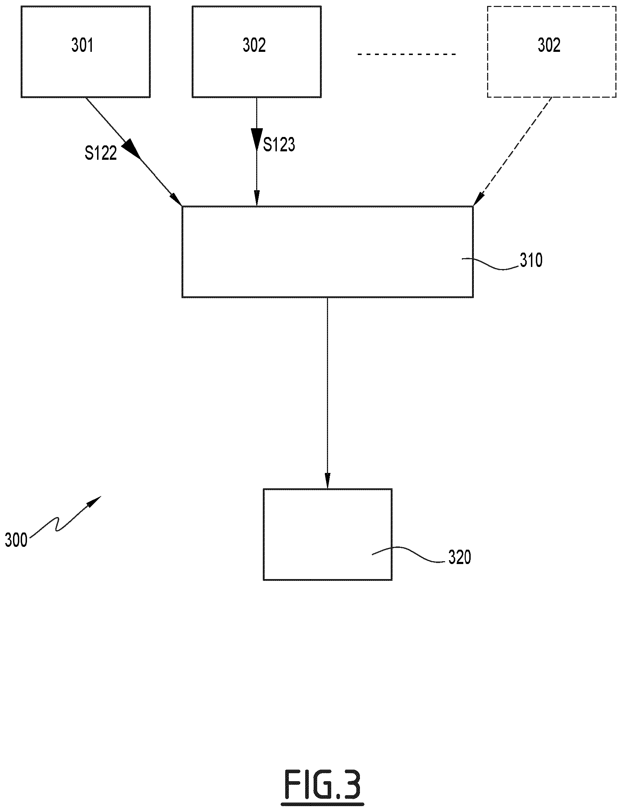

A method 300 for controlling the vehicle 10 is schematically represented on figure 3. The method 300 comprises:
- the reception 301, through the first input port 122A/222A, of the first control signal S122 representative of a state, active or inactive, of the parking relay valve 104,
- the reception 302, through the electronic control unit 121, at least one additional control signal S123 on operating conditions of the vehicle 10, the at least one additional control signal S123 including a second control signal relative to whether the engine 19 is running or not,
- the determination 310 whether the received control signals S122 & S123 correspond to a pre-determined scenario, the predetermined scenario including:
   - determining whether the parking relay valve is in the inactive state, and
   - determining whether the engine is running,
- the generation 320 of a control signal S115 / S252 for controlling the regulation device 114, so as to deliver of a positive pressure through the first output port 114B and to lock the front wheels 16 conjointly with the back wheels 18.

Each predetermined scenario is preferably recorded in a memory of the electronic control unit 121. Additional conditions may be added to define additional scenarios, in order to provide the vehicle 10 with more secure operations, depending on the equipment of the vehicle 10.

Advantageously, the at least one control signal includes an additional control signal, which is relative to whether the button 21B arranged in the cabin 14 is pressed or not.

Advantageously, the at least one includes an additional control signal, which is different from the first and second control signals, the additional control signal being relative to whether a power take off 20 of the vehicle 10 is activated or not.

Advantageously, the at least one includes an additional control signal, which is different from the first and second control signals, the additional control signal being relative to whether the vehicle 10 is located on a slope or not a power take off of the vehicle is activated.

Advantageously, the at least one includes an additional control signal, which is different from the first and second control signals, the additional control signal being relative to whether a gearbox of the vehicle 10 is in a neutral position or not.

Example 1: A brake circuit 100 / 200 for the road vehicle 10, the road vehicle 10 comprising the front wheels 16, the rear wheels 18, and the engine 19 to drive at least some of the wheels in rotation, wherein the brake circuit 100 / 200 comprises:
- the parking brake actuators 102, which are associated with the rear wheels 18 and which comprises the primary input port 102A, the parking brake actuators 102 being configured to unlock the rear wheels 18 when the primary input port 102A is subject to an air pressure above the predetermined parking pressure threshold P1, and to lock the rear wheels 18 when the primary input port 102A is subject to an air pressure below the parking pressure threshold P1,
- the parking relay valve 104, which comprises the activation input port 104A and the primary output port 104B, the primary output port 104B being fluidically connected to the primary input port 102A so as to control the parking brake actuators 102, the activation input port 102A being configured to receive the parking control signal S104 so as to switch the parking relay valve 104 between:
   - an active state, in which the parking relay valve 104 is configured to deliver air pressure above the parking pressure threshold P1 to the primary input port 102A, so as to unlock the rear wheels 18, and
   - an inactive state, in which the parking relay valve 104 is configured to let air pressure applied to the primary input port 102A below the parking pressure threshold P1, so as to let the rear wheels 18 locked,
- the front brake actuators 112, which are each associated with a respective front wheels 16 and which comprises the secondary input port 112A, the front brake actuators 112 being configured to let the front wheels 16 unlocked when the secondary input ports 112A are subject to a fluidic pressure that is null, and to progressively lock the front wheels 16 when the secondary input port 112A is subject to an increasing positive fluidic pressure,
- the regulation device 114, which is associated with the front brake actuators 112, which is fluidically connected to the secondary input ports 112A of the front brake actuators 112 and which is configured to deliver positive fluidic pressure to the front brake actuators 112 when receiving a service brake signal S114 generated by a brake pedal 116 of the vehicle 10, wherein:
- the brake circuit 100 / 200 includes the standstill control unit 120, which comprises:
   - the first input port 122A / 222A, configured to receive a first control signal S122 representative of the state, active or inactive, of the parking relay valve 104,
   - at least one additional input port 123, each additional input port being configured to receive an additional control signal S123 representative of a state of the vehicle 10,
   - the first output port 122B / 222B, which is connected to an input port of the regulation device 114 and which is configured to output a variable output pressure,
- the standstill control unit 120 is configured to generate a control signal S115 / S252 for controlling the regulation device 114, so that, in turn, the regulation device 114 delivers a positive pressure through the first output port 114B, depending on:
   - whether, according to the first control signal S122, the parking relay valve 104 is in the inactive state, and
   - whether, according to the at least one additional control signal S123, the engine 19 is running.

Example 2: The brake circuit 200 according to example 1, wherein:
- the standstill control unit 120 includes an inverted relay valve 220, which is different from the parking relay valve 104, the inverted relay valve 220 comprising three ports, that include:
   - a supply port 221, which is fluidically connected to a pressurized air supply 230 of the vehicle 10,
   - the first input port 222A, the first control signal S122 being a pneumatic signal, and
   - the first output port 222B,
- the inverted relay valve 220 is configured:
   - to deliver a non-null pressure through the first output port 222B when the primary pressure output 104B delivers a pressure below the parking pressure threshold P1, so as to lock the front wheels 16, and
   - to deliver a null pressure through the first output port 222B when the primary output port 104B delivers a pressure equal or above the parking pressure threshold P1, so as to unlock the front wheels 16.

Example 3: The brake circuit 200 according to example 2, wherein:
- the brake circuit 200 further comprises a control valve 250, which is fluidically arranged on a fluidic connection 251 between the first output port 222B and the secondary input port 112A,
- the control valve 250 is configured to close or to open the fluidic connection 251 of the first output port 221, depending on operating conditions of the vehicle 10.

Example 4: The brake circuit 200 according to example 3, wherein the control valve 250 is a solenoid valve.

Example 5: The brake circuit 200 according to any one of examples 3 or 4, further comprising an electronic control unit 121, which is configured:
- to receive the at least one additional control signal relative to the operating conditions of the vehicle 10, the at least one additional control signal including whether the engine 19 is running or not, and
- to open or close the control valve 250 depending on said operating conditions.

Example 6: The brake circuit 100 / 200 according to example 1, wherein the regulation device 114 is an EBS module, which is distinct from the standstill control unit 120.

Example 7: The brake circuit 100 according to example 1, wherein the regulation device 114 is a front ABS module, which includes the standstill control unit 120.

Example 8: The brake circuit 100 / 200 according to any one of example 6 or 7, wherein the first input port 122A / 222A is connected to the activation input port 104A or to the first output port 104B of the parking relay valve 104.

Example 9: The brake circuit 100 / 200 according to any one of example 6 to 8, wherein the standstill control unit 120 module includes an electronic control unit 121, which is configured:
- to receive at least one additional control signal S123 relative to the operating conditions of the vehicle 10, the at least one additional control signal including whether the engine 19 is running or not, and
- to deliver positive pressure through the first output 122A port depending, jointly, on the first control signal S122 and on the at least one additional control signal S123.

Example 10: The road vehicle 10, comprising the brake circuit 100 / 200 according to any one of examples 1 to 9.

Example 11: The vehicle 10 according to example 10, wherein the road vehicle 10 is a truck, in particular a medium-duty truck.

Example 12: A method 300 for controlling a vehicle 10, the vehicle 10 comprising a brake circuit 100 / 200 according to any one of example 5 or 9, the method comprising:
- the reception 301, through the first input port 122A / 222A, of the first control signal S122 representative of a state, active or inactive, of the parking relay valve 104,
- the reception 302, through the electronic control unit 121, of at least one additional control signal S123 on operating conditions of the vehicle 10, the at least one additional control signal including a second control signal relative to whether the engine 19 is running or not,
- the determination 310 whether the received control signals S122, S123 correspond to a pre-determined scenario, the predetermined scenario including:
   - determining whether the parking relay valve 104 is in the inactive state, and
   - determining whether the engine 19 is running,
- the generation 320 of a control signal S115 / S252 for controlling the regulation device 114, so as to deliver of a positive pressure through the first output port 114B and to lock the front wheels 16 conjointly with the back wheels 18.

Example 13: The method according to example 12, wherein:
- the at least one additional control signal S123 includes control signal relative to whether a button 21B arranged in a cabin of the vehicle 10 is pressed or not.

Example 14: The method according to anyone of examples 12 or 13, wherein:
- the at least one additional control signal S123 includes control signal relative to whether a power take off 20 of the vehicle 10 is activated or not.

Example 15: The method according to anyone of examples 12 to 14, wherein:
- the at least one additional control signal S123 includes control signal relative to whether the vehicle 10 is located on a slope or not.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A brake circuit (100; 200) for a road vehicle (10), the road vehicle (10) comprising front wheels (16), rear wheels (18), and an engine (19) to drive at least some of the wheels in rotation, wherein the brake circuit (100; 200) comprises:
- parking brake actuators (102), which are associated with the rear wheels (18) and which comprise a primary input port (102A), the parking brake actuators (102) being configured to release the brake on the rear wheels (18) when the primary input port (102A) is subject to an air pressure above a predetermined parking pressure threshold (P1), and to apply brake to the rear wheels (18) when the primary input port (102A) is subject to an air pressure below the parking pressure threshold (P1),
- a parking relay valve (104), which comprises an activation input port (104A) and a primary output port (104B), the primary output port (104B) being fluidically connected to the primary input port (102A) so as to control the parking brake actuators (102), the activation input port (102A) being configured to receive a parking control signal (S104) so as to switch the parking relay valve (104) between:
• an active state, in which the parking relay valve (104) is configured to deliver air pressure above the parking pressure threshold (P1) to the primary input port (102A), so as to release the brake on the rear wheels (18), and
• an inactive state, in which the parking relay valve (104) is configured to let air pressure applied to the primary input port (102A) below the parking pressure threshold (P1), so as to apply the brake to the rear wheels (18),
- front brake actuators (112), which are each associated with a respective front wheel (16) and which comprises a secondary input port (112A), the front brake actuators (112) being configured to release the brake on the front wheels (16) when the secondary input ports (112A) are subject to a fluidic pressure that is null, and to progressively apply brake to the front wheels (16) when the secondary input port (112A) is subject to an increasing positive fluidic pressure,
- a regulation device (114), which is associated with the front brake actuators (112), which is fluidically connected to the secondary input ports (112A) of the front brake actuators (112) and which is configured to deliver positive fluidic pressure to the front brake actuators (112) when receiving a service brake signal (S114) generated by a brake pedal (116) of the vehicle (10),
wherein:
- the brake circuit (100; 200) includes a standstill control unit (120), which comprises:
• a first input port (122A; 222A), configured to receive a first control signal (S122) representative of the state, active or inactive, of the parking relay valve (104),
• at least one additional input port (123), each additional input port being configured to receive an additional control signal (S123) representative of a state of the vehicle (10), and
• a first output port (122B; 222B), which is connected to an input port of the regulation device (114) and which is configured to output a variable output pressure,
- the standstill control unit (120) is configured to generate a control signal (S115; S252) for controlling the regulation device (114), so that, in turn, the regulation device (114) delivers a positive pressure through the first output port (114B), depending on:
• whether, according to the first control signal (S122), the parking relay valve (104) is in the inactive state, and
• whether, according to the at least one additional control signal (S123), the engine (19) is running.

2. The brake circuit (200) according to claim 1, wherein:
- the standstill control unit (120) includes an inverted relay valve (220), which is different from the parking relay valve (104), the inverted relay valve (220) comprising three ports, that include:
• a supply port (221), which is fluidically connected to a pressurized air supply (230) of the vehicle (10),
• the first input port (222A), the first control signal (S122) being a pneumatic signal, and
• the first output port (222B),
- the inverted relay valve (220) is configured:
• to deliver a non-null pressure through the first output port (222B) when the primary pressure output (104B) delivers a pressure below the parking pressure threshold (P1), so as to apply brake to the front wheels (16), and
• to deliver a null pressure through the first output port (222B) when the primary output port (104B) delivers a pressure equal or above the parking pressure threshold (P1), so as to release brake on the front wheels (16).

3. The brake circuit (200) according to claim 2, wherein:
- the brake circuit (200) further comprises a control valve (250), which is fluidically arranged on a fluidic connection (251) between the first output port (222B) and the secondary input port (112A),
- the control valve (250) is configured to close or to open the fluidic connection (251) of the first output port (221), depending on operating conditions of the vehicle (10).

4. The brake circuit (200) according to claim 3, wherein:
- the control valve (250) is a solenoid valve.

5. The brake circuit (200) according to any one of claims 3 or 4, further comprising:
- an electronic control unit (121), which is configured:
• to receive the at least one additional control signal relative to the operating conditions of the vehicle (10), the at least one additional control signal including whether the engine (19) is running or not, and
• to open or close the control valve (250) depending on said operating conditions.

6. The brake circuit (100; 200) according to claim 1, wherein:
- the regulation device (114) is an EBS module, which is distinct from the standstill control unit (120).

7. The brake circuit (100) according to claim 1, wherein:
- the regulation device (114) is a front ABS module, which includes the standstill control unit (120).

8. The brake circuit (100; 200) according to any one of claim 6 or 7, wherein:
- the first input port (122A; 222A) is connected to the activation input port (104A) or to the first output port (104B) of the parking relay valve (104).

9. The brake circuit (100; 200) according to any one of claim 6 to 8, wherein:
- the standstill control unit (120) module includes an electronic control unit (121), which is configured:
• to receive at least one additional control signal (S123) relative to the operating conditions of the vehicle (10), the at least one additional control signal including whether the engine (19) is running or not, and
• to deliver positive pressure through the first output (122A) port depending, jointly, on the first control signal (S122) and on the at least one additional control signal (S123).

10. A road vehicle (10), comprising the brake circuit (100; 200) according to any one of claims 1 to 9.

11. The vehicle (10) according to claim 10, wherein the vehicle is a truck, in particular a medium-duty truck.

12. A method (300) for controlling a vehicle (10), the vehicle (10) comprising a brake circuit (100; 200) according to any one of claim 5 or 9, the method comprising:
- the reception (301), through the first input port (122A; 222A), of the first control signal (S122) representative of a state, active or inactive, of the parking relay valve (104),
- the reception (302), through the electronic control unit (121), of at least one additional control signal (S123) on operating conditions of the vehicle (10), the at least one additional control signal including a second control signal relative to whether the engine (19) is running or not,
- the determination (310) whether the received control signals (S122, S123) correspond to a pre-determined scenario, the predetermined scenario including:
• determining whether the parking relay valve (104) is in the inactive state, and
• determining whether the engine (19) is running,
- the generation (320) of a control signal (S115; S252) for controlling the regulation device (114), so as to deliver of a positive pressure through the first output port (114B) and to apply brake to the front wheels (16) conjointly with the back wheels (18).

13. The method according to claim 12, wherein:
- the at least one additional control signal (S123) includes control signal relative to whether a button (21B) arranged in a cabin of the vehicle (10) is pressed or not.

14. The method according to anyone of claims 12 or 13, wherein:
- the at least one additional control signal (S123) includes control signal relative to whether a power take off (20) of the vehicle (10) is activated or not.

15. The method according to anyone of claims 12 to 14, wherein:
- the at least one additional control signal (S123) includes control signal relative to whether the vehicle (10) is located on a slope or not.
